Europäisches Patentamt

European Patent Office

Office européen des brevets

(19)

(11) EP 0 369 487 B1

(12) **EUROPEAN PATENT SPECIFICATION**

(45) Date of publication and mention
of the grant of the patent:
**15.05.1996 Bulletin 1996/20**

(51) Int Cl.6: **C08G 65/26**, C08G 65/10,
C08G 18/48

(21) Application number: **89121356.3**

(22) Date of filing: **17.11.1989**

(54) **Process for the preparation of polyether polyols with reduced unsaturation**

Verfahren zur Hestellung von Polyetherpolyolen mit verminderter Ungesättigtheit

Procédé de préparation de polyétherpolyols à insaturation réduite

(84) Designated Contracting States:
**AT BE CH DE ES FR GB GR IT LI LU NL SE**

(30) Priority: **18.11.1988 US 273375**
**14.07.1989 US 381220**

(43) Date of publication of application:
**23.05.1990 Bulletin 1990/21**

(73) Proprietor: **THE DOW CHEMICAL COMPANY**
**Midland, Michigan 48640 (US)**

(72) Inventor: **Heuvelsland, Albert J.**
**NL-4566 AT Heikant (NL)**

(74) Representative:
**Huber, Bernhard, Dipl.-Chem. et al**
**Patentanwälte**
**H. Weickmann, Dr. K. Fincke**
**F.A. Weickmann, B. Huber**
**Dr. H. Liska, Dr. J. Prechtel, Dr. B. Böhm**
**Postfach 86 08 20**
**D-81635 München (DE)**

(56) References cited:
**EP-A- 0 026 544**       **EP-A- 0 026 546**
**EP-A- 0 049 358**       **EP-A- 0 115 083**
**EP-A- 0 268 920**       **EP-A- 0 268 922**
**US-A- 2 996 550**       **US-A- 3 271 462**
**US-A- 4 282 387**

• **J.Am.Chem.Soc. 1959, 81, p. 3374-3379**

## Description

This invention relates to a process for the preparation of polyether polyols having reduced amounts of unsaturation.

Polyols for use in preparing polyurethanes are usually prepared by the reaction of an initiator compound having active hydrogen atoms with an alkylene oxide in the presence of a basic alkoxylation catalyst such as a tertiary amine, or a hydroxide or alkoxide of sodium and potassium. However, the use of these catalysts, although commonplace, can lead to the production of polyols which may contain high levels of unsaturation, especially when such polyols are of high equivalent weight.

In the base-catalyzed addition of propylene oxide to initiators containing active hydrogen atoms, the growing polyether chains are terminated predominantly with secondary hydroxy groups. However, under the conditions of the reaction, temperature, pressure and catalyst concentration, the propylene oxide may isomerize and rearrange to give an unsaturated allyl alcohol before it can react with the initiator.

The ability to prepare high equivalent weight products in the presence of the allyl alcohol is reduced as the allyl alcohol contains an active hydrogen which can react with propylene oxide, thereby limiting molecular weight build-up on the desired initiator. The problem of unsaturation becomes more severe as the desired equivalent weight of the polyol becomes greater.

When polyols of high equivalent weight and high unsaturation are used in the preparation of polyurethane polymers such as flexible foams, products with undesirable properties can result. Problems such as foam discoloration, inferior compressive and tensile strengths, low reactivity, low flexural modulus and poor humid aging may be encountered. It is therefore desirable to provide a means of reducing unsaturation in such polyols, so allowing for the manufacture of improved polyurethane polymers.

The types of terminal unsaturation and means of reducing it by acid treatment of the end product are discussed by Dege et al., *Journal of the American Chemical Society*, p. 3374, Vol. 81 (1959). Unsaturation in polyols to be used in preparing polyurethane polymers can be reduced by acid treatment of the product as described in U.S. Patents 2,996,550 and 3,271,462.

U.S. Patent 3,393,243 teaches the use of the Group IA metal catalyst caesium hydroxide for the preparation of polyoxypropylene polyether polyols having an equivalent weight of from 1500 to 2500 and reduced levels of unsaturation. This catalyst is much more costly than the alternative basic catalysts, as it is required in larger quantities to operate at an equivalent molar concentration due to the high molecular weight of caesium.

The use of caesium hydroxide as catalyst in the alkoxylation reaction of alcohols giving products with low unsaturation levels has recently been documented. See patent applications EP 268,922-A and EP 268,920-A.

It is desirable to develop a process which can achieve the preparation of polyether polyols with reduced unsaturation and reduce or eliminate the use of expensive catalysts such as caesium hydroxide and/or the acid treatment of the reaction product.

The use of barium-containing catalysts in the presence of catalyst promoters is described for the ethoxylation reactions of alkanols to make nonionic surfactants, see, for example, U.S. Patents 4,210,764; 4,239,917 and EP 46,647.

The Japanese patent application 55/092,733-A teaches the use of barium hydroxide in combination with a carbon dioxide finishing process for the preparation of ethylene oxide containing polyether polyols having equivalent weights of 187 or less. The products so produced are suitable for the preparation of rigid or semi-rigid polyurethane foam due to their very low residual alkoxylation catalyst content.

It has now been discovered that polyether polyols of high equivalent weights and reduced unsaturation can be prepared when using catalysts containing the alkali earth metals, barium and strontium.

One subject of the present invention is a process for the preparation of a polyol having an equivalent weight of from 200 to 4000 as claimed in claim 1. Preferred embodiments thereof are specified in claims 2 to 9. Another subject of the invention is the use of strontium and barium based catalysts in such a process according to claim 10.

In a first aspect, this invention is a process for the preparation of a polyol having an equivalent weight of from 200 to 4000 by the reaction of a monoepoxy compound with an initiator containing at least two active hydrogen-containing groups per molecule in the presence of a catalyst, characterized in that the catalyst is selected from barium, strontium and their oxides, hydroxides, hydrated hydroxides or monohydroxide salts, or mixtures thereof; and the monoepoxy compound comprises at least 70 weight percent of propylene oxide or butylene oxide, wherein the resulting polyol has a total unsaturation level of less than 0.08 milliequivalents/gram polyol.

In a second aspect, this invention is a process for preparing a polyol having an equivalent weight of from 200 to 4000 which comprises reacting a monoepoxy compound with an initiator containing at least two active hydrogen-containing groups per molecule in the presence of a catalyst, characterized in that the catalyst is selected from barium or strontium or their oxides, hydroxides, hydrated hydroxides or monohydroxide salts, or mixtures thereof, the monoepoxy compound comprises at least 70 weight percent of propylene oxide or butylene oxide, and in the presence of up to 1 percent by weight, based on total weight of monoepoxy compound, of water added during the reaction of the monoepoxy compound with the initiator, wherein the resulting polyol has a total unsaturation level of less than 0.08 milliequivalents/gram polyol.

The specification also discloses a polyol produced by the process of the invention.

Furthermore, there is disclosed a polyol composition comprising from 0.1 to 99.9 percent by weight of a polyol produced by the process of the invention and a polyurethane polymer prepared by a reaction comprising contacting an organic polyisocyanate with a polyol prepared by the process of the invention.

Surprisingly, this invention provides for the preparation of high equivalent weight polyols with reduced unsaturation. In addition, this invention allows for the products to be at higher reaction temperatures and catalyst concentrations than can normally be used when employing potassium hydroxide catalysis, without disadvantageously increasing unsaturation levels.

As described hereinabove, a polyol having an equivalent weight of from 200 to 4000 and low unsaturation levels can be prepared by the alkoxylation of an initiator having at least two active hydrogen-containing groups per molecule. Active hydrogen-containing groups for the purpose of this invention are defined as those hydrogen-containing groups which react positively in the well-known Zerewitinoff test. See Kohler, *Journal of the American Chemical Society,* p. 3181, Vol. 49 (1927). Representative active hydrogen-containing groups include -OH, -COOH, -SH and -NHR where R can be hydrogen, alkyl, cycloalkyl and aryl aromatic. Preferred active hydrogen-containing groups for use in this present invention are hydroxyl groups.

The hydroxyl groups of the initiator can be of primary or secondary character. It can be advantageous for reasons of catalyst solubility to have an initiator or initiator mixture which has a primary hydroxyl content.

Suitable initiators for preparation of polyols by the process of this invention are those having from two to eight, preferably from two to four active hydrogen-containing groups per molecule and an equivalent weight of from 5 to 1500 and preferably from 9 to 750, more preferably from 50 to 550 and most preferably from 80 to 300.

Examples of suitable initiators include water, glycerine, trimethylolpropane, pentaerythritol, hexane triol and various isomers, carbohydrate compounds such as lactose, $\alpha$-methylglucoside, $\alpha$-hydroxyethylglucoside, hexitol, heptitol, sorbitol, dextrose, mannitol, sucrose and amine compounds such as ammonia, ethylenediamine, diethylenetriamine, aminoethylpiperazine, aniline, diaminotoluene and aromatic compounds such as the condensates of a phenol with acetone or formaldehyde or the condensation product of a phenol with formaldehyde and an alkanolamine, and mixtures thereof. Other suitable initiators also include polyoxyalkylene glycols and other polyoxyalkylene polyols. Other initiators having active hydrogen-containing groups which can be employed include those disclosed in U.S. Patents 4,269,945 and 4,394,431.

The preferred initiators include water, ethylene glycol, 1,2-propylene glycol, 1,3-propylene glycol, the various isomers of butylene glycol, pentylene glycol and hexylene glycol, glycerine, trimethylolpropane, pentaerythritol, ethylenediamine, and their polyoxyalkylene adducts, and mixtures thereof.

Suitable monoepoxy compounds for use in this invention include the $\alpha$- and $\beta$-alkylene oxides and halogenated and aryl-substituted derivatives thereof, glycidyl ethers having from 3 to 20 carbon atoms, cyclic ethers such as tetrahydrofuran, and mixtures thereof.

Exemplary of suitable alkylene oxides are ethylene oxide, 1,2-propylene oxide, 1,2-butylene oxide, 2,3-butylene oxide, styrene oxide, glycidol and epichlorohydrin. Exemplary of suitable glycidyl ethers are allyl glycidyl ether, phenyl glycidyl ether and butyl glycidyl ether.

The preferred monoepoxy compounds for use in the process according to this invention include ethylene oxide, 1,2-propylene oxide, 1,2-butylene oxide, 2,3 -butylene oxide and mixtures thereof. The process of this invention is particularly suited to the preparation of polyols when the monoepoxy compound reacting with the initiator includes propylene oxide or butylene oxide. Of these, propylene oxide is more susceptible than other oxides to isomerization resulting in unsaturation.

The quantities and types of oxide, and feed sequence (random or block) depend on the eventual equivalent weight of the product to be prepared and what the intended polyurethane application is to be. For example, when polyols of high reactivity are required, the feed sequence will terminate with ethylene oxide to give products containing primary hydroxyl groups.

The polyols prepared according to the process of this invention have an equivalent weight of from 200 to 4000, preferably from 500 to 3500 and more preferably from 1000 to 2500. When such polyols are prepared, the total weight of monoepoxy compound reacting with the initiator comprises from 70, and up to 100 percent by weight of propylene oxide and/or butylene oxide. In addition, the resulting polyols are characterized in that advantageously they have a total unsaturation content of less than 0.080, preferably less than 0.050, more preferably less than 0.040 and most preferably less than 0.020 milliequivalents/gram polyol.

Optionally, when high polyol reactivity is desired, the polyol will contain end primary hydroxyl groups obtained by advantageously reacting ethylene oxide (EO) in the final stage of the alkoxylation reaction. Such polyols are termed EO capped polyols. The quantity of ethylene oxide used as a cap on the polyoxyalkylene polyol will depend on the overall polyol reactivity desired and the equivalent weight of the end product. Increasing quantity of ethylene oxide provides in general for greater reactivity. Advantageously, sufficient quantities of E0 are used to give a product having at least 25 percent, preferably at least 45 percent, and more preferably at least 65 percent primary hydroxyl content of the total polyol hydroxyl content.

The catalysts used in accordance with the process of this invention to promote the alkoxylation reaction include barium, strontium and their oxides, hydroxides, hydrated hydroxides, monohydroxide salts or mixtures thereof. The preferred catalysts are barium hydroxide, hydrated barium hydroxide and monohydroxide barium salts or mixtures thereof and the equivalent strontium compounds. Especially preferred is barium hydroxide monohydrate.

When preparing polyols by the process of this invention, the concentration of the catalyst is such as to provide for the manufacture of the product within an acceptable time. Advantageously, at least 100 ppm, and preferably at least 500 ppm of metal cation based upon the weight of initiator present is suitable for catalyzing the reaction. Preferably, the catalyst is present in an amount of from 0.01 to 50, more preferably from 0.01 to 30, and most preferably from 0.01 to 15 percent by weight based upon the weight of the initiator to be reacted.

The quantity of catalyst used to catalyze the reaction advantageously is such that the resulting crude product, prior to neutralization or treatment to remove residual catalyst, contains less than 20,000, preferably less than 10,000 and most preferably less than 5,000 ppm of the metal based on the weight of the end product present. If the resulting crude product contains catalyst quantities in excess of this, then efficient neutralization and/or filtration to remove the catalyst may not be possible.

In a preferred embodiment of the process of this invention, during the course of the alkoxylation reaction of an initiator with an alkylene oxide in the presence of the above described catalyst, a controlled quantity of water can be added .

The quantity of water to be added during the reaction is sufficient to bring about a further reduction in the unsaturation level of the final alkoxylation product. The quantity of water required to achieve this may vary with the type of initiator, monoepoxy compound and reaction conditions being employed. Generally, the quantity of water is up to one percent and preferably up to 0.1 percent by weight based on total weight of monoepoxy compound reacting with initiator. Advantageously, the quantity of water is about one part by weight for each 100 to 20000, preferably one part by weight for each 1000 to 7000, and more preferably one part by weight for each 3000 to 5000 parts by weight of total weight monoepoxy compound to be reacted with the initiator.

The mode of addition of water is not critical and is principally dependent on equipment and instrumentation available. The addition of water can be by a step-wise procedure comprising addition of one or more increments during the feeding of the monoepoxy compound to the reaction or alternated with the addition of monoepoxy compound to the reaction. Alternatively, an addition mode comprising a continuous addition of water simultaneously with the monoepoxy compound may be employed. In the latter case the water and monoepoxy compound depending on the equipment available, can be fed as a combined stream or individual streams. Whenever possible, for reasons of economics and equipment productivity, it is desirable to add the water by a continuous addition procedure. By the term "continuous" it is understood that water and monoepoxy feed start and terminate at the same time.

When the water is added in a step-wise procedure, advantageously, an initial amount of monoepoxy compound is reacted with the initiator prior to the first addition of water. The initial amount of monoepoxy compound added need only be as little as 5 percent of the total monoepoxy feed required to produce the product of desired equivalent weight, but preferably is at least 15 percent, and more preferably at least 25 percent of the total monoepoxy feed required.

In accordance with the process of the invention the reaction is advantageously conducted at a temperature within the range of from 60°C to 180°C, preferably within the range of from 75°C to 130°C and more preferably within the range of from 80°C to 125°C. The reaction is normally conducted in a closed system at a pressure normally not exceeding 150 pounds per square inch gauge (psig) (1034KPa), preferably not exceeding 120 psig(827KPa)and most preferably not exceeding 75 psig (520KPa). These pressures are maintained by controlling the feed rates of the alkylene oxide(s) and thus the quantity of oxide in the gaseous phase at the reaction temperature. Temperatures and pressures over and above these ranges are generally not beneficial to the quality of resultant product obtained, and products with a high level of color or unsaturation may be produced.

The residual catalyst in the polyols produced by the process of this invention may be neutralized and/or removed by any of the procedures well-known to those skilled in the art, for example, neutralization of the catalyst by acids such as phosphoric acid, sulfuric acid, acetic acid and solid organic acids as described in U.S. Patent 3,000,963. The catalyst may also be removed by the carbon dioxide finishing procedure as described in the Japanese Patent application 55/092,733-A, or removed by adsorption on activated clay such as, for example, magnesium silicate. After removal and/or neutralization of the catalyst, the metal cation content of the polyol advantageously is less than 500 ppm, preferably less than 100 ppm and more preferably less than 50 ppm. Catalyst concentrations over and above these ranges are generally not beneficial to the use of the product in the preparation of polyurethanes.

The polyols produced by the process of this invention may be reacted with polyisocyanates to produce polyurethane polymers or blended with other active hydrogen-containing compounds to provide compositions. Such compositions can have a variety of uses including the preparation of polyurethane polymers. A polyol composition can comprise from 0.1 to 99.9 percent by weight of one or more polyols prepared by the process of this invention.

When the polyols prepared by the process of this invention are reacted with polyisocyanates to manufacture polyurethane polymer, the reaction optionally comprises other active hydrogen-containing compounds, catalysts, surfactants, stabilizers, fillers, dyes, flame retardants, blowing agents and other additives. Suitable processes for the preparation of polyurethane polymers are discussed in U.S. Patents RE 24514, 3,821,130, and G.B. patent 1,534,258. Suitable equipment and processes for the preparation of polyurethane polymers are further discussed by J. H. Saunders and K. C. Frisch in *Polyurethanes Chemistry and Technology* Volumes I and II, R. E. Krieger Publishing Company, Inc., ISBN 0-89874-561-6.

The polyols prepared by the process of the invention are useful for the manufacture of polyurethane polymers in a variety of application areas. Areas include flexible slabstock and molded foam, carpet backing and rigid foams for laminate and insulative applications. Non-cellular polyurethane polymers may also be prepared including elastomers suitable for use as coatings, shoe soles and molding applications.

In addition, polyols prepared according to the invention may also be used to modify polyisocyanates in the preparation of isocyanate-terminated prepolymers.

The following examples are illustrative of the present invention. Unless otherwise stated, all parts are by weight. Unless otherwise stated, the feed rate of the monoepoxy compound is such so as to maintain a constant pressure in the reactor of about 40 to 60 psig(275 to 415 KPa gauge) until the desired quantity has been fed to the reaction.

The equivalent weight of the products produced is calculated from the hydroxyl number as observed by procedure ASTM E 326-69. Total unsaturation levels are determined by procedure ASTM D 2849-69. Propenyl unsaturation (vinyl ether) is determined by the procedure documented in *Quantitative Organic Analysis via Functional Groups* by Siggia, 4th edition, ISBN 0-471-03273-5.

$$\text{equivalent weight} = \frac{56100}{\text{observed hydroxyl number}} .$$

All unsaturation values relate to products in which the catalyst has been neutralized and/or removed by filtering.

Example 1

An initiator mixture of 203 parts of polyoxypropylene glycol with an equivalent weight of 200 and 47 parts of barium hydroxide octahydrate is heated to 135°C and flashed until all the hydroxide is dissolved. By the term "flashed" it is meant that water is removed by use of pressures below one atmosphere. Reduced pressures sufficient to remove water but not other volatile products are employed. Flashing is carried out until the free water content of the mixture is reduced to about 2500 ppm.

To 61 parts of this initiator, 444 parts of propylene oxide is fed at a reaction temperature of 100°C at such a rate so as to maintain a constant pressure of about 45 to 60 psig (275 to 415 KPa gauge). The resulting product has an equivalent weight of 1575 and an unsaturation of 0.020 meg/g (milliequivalents/gram). The product is subsequently capped with 140 parts of ethylene oxide at the same temperatures and pressures to give a final product having an equivalent weight of 1975 and a primary hydroxyl content of 91.4 percent.

Example 2

To 42 parts of the initiator of Example 1, 431 parts of propylene oxide is fed at a reaction temperature of 95°C at such a rate so as to maintain a constant pressure of about 45-60 psig (275 to 415 KPa gauge). The resulting product has an equivalent weight of 2425 and an unsaturation of 0.035 meq/g. The product is subsequently capped with 117 parts of ethylene oxide to give a final product having an equivalent weight of 3000, a primary hydroxyl content of 93.0 percent and an unsaturation level of 0.028 meq/g.

Example 3

To 140 parts of monopropylene glycol (MPG), 75 parts of barium hydroxide monohydrate is added. The mixture is heated to 90°C, and flashed until all the catalyst is dissolved. Propylene oxide is then fed to give an intermediate product having an equivalent weight of 210 and containing about 10 percent by weight barium hydroxide catalyst. To 43 parts of this intermediate product, 300 parts of propylene oxide is fed at 95°C followed by 90 parts of ethylene oxide. The final product has an equivalent weight of 2000, a primary hydroxyl content of 90 percent and an unsaturation level of 0.017 meq/g.

Example 4

An initiator mixture is prepared from 128 parts of MPG, 28.5 parts of barium hydroxide monohydrate and 67 parts of barium hydroxide octahydrate and maintained at 105°C whilst flashing until all the catalyst is dissolved. The temperature is then reduced to 95°C and 350 parts of propylene oxide is fed to give an intermediate product having a hydroxyl equivalent weight of about 225.

To 38 parts of this intermediate product a further quantity of 445 parts of propylene oxide is fed at a reaction temperature of 90°C, followed by 98 parts of ethylene oxide. The resulting product has an equivalent weight of 2735, a primary hydroxyl content of 88 percent and an unsaturation level of 0.022 meq/g.

Example 5

The initiator mixture (39 parts) as described in Example 4 is mixed with 36 parts of polyoxypropylene glycol having a hydroxyl equivalent weight of about 225. To 41 parts of this resulting mixture, 22 parts of propylene oxide is fed at a reaction temperature of 90°C and then subsequently 53 parts of ethylene oxide. The resulting product has an equivalent weight of 1000, a primary hydroxyl content of 72.5 percent and an unsaturation level of 0.009 meq/g.

Example 6

To 5 parts of the initiator mixture as described in Example 4, 20 parts of propylene oxide is fed at a reaction temperature of 95°C. The resulting polyoxypropylene glycol has an equivalent weight of 1150 and an unsaturation level of 0.017 meq/g.

Example 7

To 3.15 parts of the initiator mixture as described in Example 4, 25 parts of propylene oxide is fed at a reaction temperature of 95°C. The resulting polyoxypropylene glycol has an equivalent weight of 1725 and an unsaturation level of 0.024 meq/g.

Example 8

A mixture is prepared by dissolving 25 parts of strontium hydroxide octahydrate in 75 parts of MPG at 95°C and removing the water by vacuum. Propylene oxide (380 parts,) is fed at a reaction temperature of 95°C to this mixture to obtain an intermediate product having an equivalent weight of about 230. Then to 5 parts of the intermediate product 20 parts of propylene oxide is added. The resulting polyoxypropylene glycol has an equivalent weight of 1150 and an unsaturation level of 0.018 meq/g.

Example 9

A product is obtained by reacting 5 parts of the intermediate as described in Example 8 with 32.5 parts of propylene oxide. The resulting polyoxypropylene glycol has an equivalent weight of 1585 and an unsaturation level of 0.026 meq/g.

Example 10

An initiator is prepared by dissolving at 120°C barium hydroxide monohydrate in a polyether triol having an equivalent weight of 150. A vacuum is applied until all catalyst has dissolved, giving a solution containing 0.075 mole catalyst/mole OH. To 30 parts of this initiator, 350 parts of propylene oxide is added at a temperature of 110°C, followed by 62 parts of ethylene oxide to give a capped product containing 14 weight percent ethylene oxide. The resulting product has an equivalent weight of 2150, a primary hydroxyl content of 84.1 percent and an unsaturation level of 0.035 meq/g.

Example 11

An initiator is prepared as in Example 10, but having a catalyst concentration of 0.067 mole of catalyst/mole OH. To 34 parts of this initiator is added 400 parts of propylene oxide at a reaction temperature of 130°C followed by 71 parts of ethylene oxide to give a capped product containing 14 percent by weight ethylene oxide. The resulting product has an equivalent weight of 1975, a primary hydroxyl content of 81.8 percent and an unsaturation level of 0.073 meq/g.

Example 12

An initiator is prepared as in Example 10, but having a catalyst concentration of 0.106 mole of catalyst/mole OH. To 35 parts of this initiator is added 493 parts of propylene oxide at a reaction temperature of 100°C followed by 93 parts of ethylene oxide. The resulting product has an equivalent weight of 2390, a primary hydroxyl content of 87.6 percent and an unsaturation level of 0.032 meq/g.

Example 13

An initiator is prepared as in example 10, but having a catalyst concentration of 0.106 mole of catalyst/mole OH. To 35 parts of this initiator is added 700 parts of propylene oxide at a reaction temperature of 100°C followed by 130 parts of ethylene oxide. The resulting product has an equivalent weight of 2740, a primary hydroxyl content of 89.8 percent and an unsaturation level of 0.034 meq/g.

Example 14

An initiator is prepared as in Example 10, but having a catalyst concentration of 0.106 mole of catalyst/mole OH. To 35 parts of this initiator is added 950 parts of propylene oxide at a reaction temperature of 100°C followed by 174 parts of ethylene oxide. The resulting product has an equivalent weight of 3400, a primary hydroxyl content of 88.8 percent and an unsaturation level of 0.039 meq/g.

Example 15

Polyether polyols having equivalent weights of 1350 and 1650 and containing 12 percent and 15 percent ethylene oxide (capped), respectively, are prepared by the process of the invention using barium hydroxide catalyst and initiator as described in Example 10. Similar comparative polyols are made using potassium hydroxide catalyst. Table I gives the products and their total unsaturation concentration and the unsaturation of propenyl character.

As can be seen from this data, polyether polyol preparation with the catalysts of this invention results in significantly lower unsaturation in the end product. In addition, it can be seen that the propenyl fraction of the unsaturation is significantly reduced, with data showing reductions of from about 30 to 80 percent depending on the equivalent weight of the product and temperature of alkoxylation. Polyurethane polymers prepared with polyols having a reduced propenyl unsaturation show improved stability when exposed to acidic or humid conditions, and a reduced tendency to exhibit scorching in foams.

TABLE I

| Product eq wt (% EO) | Cata. Conc. m/mOH① | Reac Temp (°C) | Total Uns.② meq/g | Propenyl Uns③meq/g | Primary Hydroxyl % |
|---|---|---|---|---|---|
| 1350 (12%) | (Ba)0.085 | 120 | 0.033 | 0.001 | 75 |
| 1650 (15%) | (Ba)0.085 | 115 | 0.030 | 0.005 | 83 |
| 1350④(12%) | (K)0.085 | 120 | 0.061 | 0.005 | 70 |
| 1650④(15%) | (K)0.085 | 115 | 0.061 | 0.008 | 80 |

① Catalyst concentration - moles of catalyst/moles of initiator OH. (Ba) - barium hydroxide; (K) - potassium hydroxide.

② Total unsaturation.

③ Propenyl unsaturation.

④ Comparative data, not an example of this invention.

Example 16.

This example illustrates production of a polyol where the water is introduced by a step-wise procedure

An initiator mixture of 100 parts of a polyoxypropylene triol having a hydroxyl equivalent weight of 163 and 8.5 parts of barium hydroxide monohydrate is heated and flashed until all hydroxide is dissolved. The resulting initiator mixture contains 7.9 percent by weight barium hydroxide, expressed as monohydrate.

To 20 parts of the resulting initiator mixture at a temperature of 120°C is fed 50 parts of propylene oxide at such a rate to maintain a constant pressure of about 45 to 60 psig (275 to 415 KPa). This is then followed by a feed of 0.037 part of water, whilst maintaining the temperature and pressure.

A further 50 parts of propylene oxide followed again by 0.037 part of water is fed to the reaction mixture and finally a third addition of 52 parts of propylene oxide followed by a third addition of 0.037 part of water is fed to the reaction mixture. Thus to 20 parts of this initiator mixture, a total of 152 parts of propylene oxide and 0.111 parts of water is fed.

The weight ratio of water to propylene oxide is 1:1370.

When the propylene oxide feed and water feed is complete, the reaction mixture is maintained at a temperature of 120°C until the reactor pressure is constant with time.

When the constant pressure is obtained, residual alkoxylation catalyst is removed by treating the crude reaction product with magnesium silicate and filtering. Following this, the pressure in the reactor is reduced to about 0.10 bar for about one hour and any volatile products removed.

The resulting reaction product obtained has a molecular weight of 4350, equivalent weight 1450, and a total unsaturation of 0.036 meq/g (milliequivalents/gram).

Example 17.

This example illustrates production of a polyol where the water is introduced by a continuous procedure

To 20 parts of the initiator mixture of Example 16 is fed a total of 152 parts of propylene oxide and 0.149 part of water at a reaction temperature of 120°C at such a rate so as to maintain a constant pressure of about 45 to 60 psig (275 to 415 KPa). The propylene oxide and water are fed as independent streams at such a rate that the feeds start and terminate at the same time. The weight ratio of water to propylene oxide is 1:1016.

When feeding of the propylene oxide and water is complete, the reaction product is treated as described for Example 16.

The resulting reaction product obtained has a molecular weight of 4400, equivalent weight 1467 and a total unsaturation of 0.036 meq/g.

Example 18.

This example follows the procedure of Example 16

To 20 parts of the initiator mixture of Example 16 is added a total of 152 parts of propylene oxide and 0.037 part of water.

The parts by weight ratio of water to propylene oxide is 1:4031.

The resulting product has a molecular weight of 4350, equivalent weight 1450 and a total unsaturation of 0.036 meq/g.

Example 19.

This example follows the procedure of Example 17

To 20 parts of the initiator mixture of Example 16 is added a total of 152 parts of propylene oxide and 0.089 part of water.

The weight ratio of water to propylene oxide is 1:17000.

The resulting product has a molecular weight of 4450, equivalent weight 1483 and a total unsaturation of 0.041 meq/g.

Example 20

This example in conjunction with Examples 17-19 illustrates the further advantage to be obtained in reduced levels of unsaturation when water is added during the alkoxylation reaction, under similar process conditions. In this example process conditions are as for Examples 17-19, but no water is added.

To 20 parts of the resulting initiator mixture of Example 16 is fed a total of 152 parts of propylene oxide at a reaction temperature of 120°C and at such a rate so as to maintain a constant pressure of about 45 to 60 psig (275 to 415 KPa) in the reactor.

When feeding of the propylene oxide is complete, the reaction product is treated as described for Example 16.

The resulting product obtained has a molecular weight of 4400, equivalent weight 1467 and a total unsaturation of 0.048 meq/g.

Example 21

This example illustrates production of a diol, where the water is introduced by a continuous procedure

An initiator mixture of 100 parts of a polyoxypropylene diol having a hydroxyl equivalent weight of 200 and 11 parts of barium hydroxide monohydrate is heated and flashed until all hydroxide is dissolved. The resulting initiator mixture contains 10.1 percent by weight barium hydroxide monohydrate.

To 20 parts of the resulting initiator mixture is fed a total of 190 parts of propylene oxide and 0.051 part of water at a reaction temperature of 120°C at such a rate so as to maintain a constant pressure of about 45 to 60 psig (275 to 415 KPa). The propylene oxide and water are fed as independent streams at such a rate that the feeds start and terminate at the same time. The weight ratio of water to propylene oxide is 1:3725.

When feeding of the propylene oxide and water is complete, the reaction product is treated as described for Example 16.

The resulting reaction product obtained has a molecular weight of 3300, equivalent weight 1650 and a total unsaturation of 0.042 meq/g.

Substitution of the water in the process by low molecular weight diols, triols and other polyoxyalkylene glycols does not provide for the similar improvement in the process resulting in reduction of unsaturation levels. Similarly, substituting the above-mentioned alkoxylation catalysts of the process by other conventional alkoxylation catalysts such as potassium hydroxide does not provide for similar improvements in the unsaturation levels of the resulting products.

Comparative Example A

An initiator is prepared by dissolving potassium hydroxide at 120°C in a polyoxypropylene diol having an equivalent weight of 200. Sufficient potassium hydroxide is dissolved to provide a solution containing 0.041 mole of catalyst/mole OH. To 50 parts of this initiator, 330 parts of propylene oxide is fed at a reaction temperature of 90°C. The resulting product has an equivalent weight of 1575 and an unsaturation level of 0.044 meq/g. This compares to an unsaturation level of 0.020 meq/g in Example 1, even though Example 1 was obtained in a process run at a higher temperature which normally increases unsaturation.

Comparative Example B

To 34 parts of the initiator of Comparative Example A, 200 parts of propylene oxide is reacted at a temperature of 90°C and then subsequently with 32 parts of ethylene oxide. The resulting product has an equivalent weight of 1000 and an unsaturation level of 0.024 meq/g. This compares to an unsaturation level of 0.009 meq/g in Example 5, at an identical process temperature.

Comparative Example C

An initiator is prepared by dissolving potassium hydroxide at 120°C in polyoxypropylene glycol having a hydroxyl equivalent weight of 67. Sufficient potassium hydroxide is dissolved to give a solution containing 0.016 mole catalyst/mole OH with all water removed. To 26.6 parts of this initiator, 660 parts of propylene oxide is added at a reaction temperature of 95°C, and then 164 parts of ethylene oxide is added. The resulting product has an equivalent weight of 2100 and an unsaturation level of 0.048 meq/g. This compares to an unsaturation level of 0.017 meq/g in Example 3 prepared from a monopropylene glycol.

Comparative Example D

An initiator is prepared by dissolving potassium hydroxide at 120°C in a polyoxypropylene triol having a hydroxyl equivalent weight of 150. A vacuum is applied until all catalyst has dissolved giving a solution containing 0.085 mole catalyst/mole OH. To 45 parts of this initiator, 625 parts of propylene oxide is added at a temperature of 110°C, followed by 105 parts of ethylene oxide to give a capped product containing 13.5 weight percent ethylene oxide. The resulting product has an equivalent weight of 2025, a primary hydroxyl content of 78 percent and an unsaturation level of 0.084 meq/g. These values compare to a primary hydroxyl content of 84.1 percent and unsaturation of 0.035 meq/g for Example 10.

Comparative Example E

To 45 parts of the initiator of Comparative Example D, 690 parts of propylene oxide is reacted at 130°C followed by 130 parts of ethylene oxide to give a capped product containing 15 percent by weight ethylene oxide. The resulting product has an equivalent weight of 1955, a primary hydroxyl content of 80 percent and an unsaturation level of 0.143 meq/g. These values compare to a primary hydroxyl content of 81.8 percent and unsaturation of 0.073 meq/g for Example 11.

Comparative Example F

To 31 parts of the initiator of Comparative Example D, 625 parts of propylene oxide is reacted at 95°C followed by 62 parts of ethylene oxide to give a capped product. The resulting product has an equivalent weight of 2430, a primary hydroxyl content of 80.5 percent and an unsaturation level of 0.065 meq/g. These values compare to a primary hydroxyl content of 87.6 percent and unsaturation of 0.032 meq/g for Example 12, even though Example 12 was obtained in a process run at a higher temperature which normally increases unsaturation.

As can be seen from the examples presented, preparation of high equivalent weight polyether polyols by the process of this invention gives products with greatly reduced total unsaturation and significantly reduced propenyl unsaturation. In addition, this invention allows for products to be prepared at higher reaction temperatures and catalyst concentration than could normally be used when employing potassium hydroxide catalysis, without disadvantageously increasing the unsaturation levels.

As can be seen from Examples 10, 11 and 12 and Comparative Examples D, E and F, the primary hydroxyl content of polyols with similar equivalent weight and total ethylene oxide content as a cap is significantly higher when they are prepared according to the process of this invention.

## Claims

1. A process for the preparation of a polyol having an equivalent weight of from 200 to 4000 by the reaction of a monoepoxy compound with an initiator containing at least two active hydrogen-containing groups per molecule in the presence of a catalyst, characterized in that:

   a) the catalyst is selected from barium, strontium and their oxides, hydroxides, hydrated hydroxides or monohydroxide salts, or mixtures thereof; and

   b) the monoepoxy compound comprises at least 70 weight percent of propylene oxide or butylene oxide,

   wherein the resulting polyol has a total unsaturation level of less than 0.08 milliequivalents/gram polyol.

2. A process as claimed in Claim 1 wherein a quantity of water up to 1 percent by weight, based on total weight of monoepoxy compound, is added during the reaction of monoepoxy compound with initiator.

3. A process as claimed in Claim 2 wherein the quantity of water is about one part by weight for each 100 to 20000 parts by weight of monoepoxy compound; preferably about one part by weight for each 1000 to 7000 parts by weight of monoepoxy compound, and more preferably about one part by weight for each 3000 to 5000 parts by weight of monoepoxy compound.

4. A process as claimed in any one of the preceding claims wherein the catalyst is barium hydroxide, hydrated barium hydroxide, monohydroxide barium salts, strontium hydroxide or mixtures thereof.

5. A process as claimed in any one of the preceding claims wherein the initiator contains from 2 to 8 active hydrogen-containing groups per molecule and has an equivalent weight of from 5 to 1500.

6. A process as claimed in any one of the preceding claims wherein the monoepoxy compound further includes ethylene oxide, styrene oxide, glycidol, epichlorohydrin and mixtures thereof.

7. A process as claimed in any one of the preceding claims wherein the catalyst is present in an amount from of 0.01 to 50 percent by weight based upon the weight of initiator to be reacted, and wherein the reaction is carried out at a temperature of from 60°C to 180°C and at a pressure up to 150 pounds per square inch gauge (psig) (1034.22 kPa).

8. A process as claimed in any one of the preceding claims wherein the polyol has a total unsaturation level of less than 0.04 milliequivalents/gram polyol.

9. A process as claimed in any one of the preceding claims wherein an initiator having from 2 to 4 active hydrogen-containing groups per molecule is reacted in the presence of from 0.1 to 50.0 percent by weight based upon weight of initiator present of barium hydroxide, hydrated barium hydroxide or a monohydroxide barium salt with a monoepoxy compound comprising at least 70 weight percent of propylene oxide or butylene oxide at a temperature of from 75°C to 130°C and at a pressure up to 150 pounds per square inch gauge (psig) (1034.22 kPa).

10. Use of barium, strontium and their oxides, hydroxides, hydrated hydroxides or monohydroxide salts, or mixtures thereof, as catalyst when reacting an initiator containing at least two active hydrogen-containing groups per molecule with a monoepoxy compound comprising at least 70 weight percent of propylene oxide or butylene oxide to obtain a polyol having an equivalent weight of from 200 to 4000 characterized in that the resulting polyol has a total unsaturation level of less than 0.08 milliequivalents/gram polyol.

**Patentansprüche**

1. Verfahren zur Herstellung eines Polyols mit einem Äquivalentgewicht von 200 bis 4000 durch die Reaktion einer Monoepoxyverbindung mit einem Initiator, der mindestens zwei aktiven Wasserstoff enthaltende Gruppen pro Molekül enthält in der Gegenwart eines Katalysators,
   dadurch gekennzeichnet,
   daß:

   a) der Katalysator ausgewählt wird aus Barium, Strontium und deren Oxiden, Hydroxiden, wasserhaltigen Hydroxiden oder Monohydroxysalzen oder Gemischen davon und
   b) die Monoepoxyverbindung mindestens 70 Gewichtsprozent Propylenoxid oder Butylenoxid umfaßt,

   wobei das entstehende Polyol einen Gesamtunsättigungsgehalt von weniger als 0,08 Milliäquivalent/Gramm Polyol aufweist.

2. Verfahren nach Anspruch 1, worin eine Wassermenge von bis zu 1 Gewichtsprozent, bezogen auf das Gesamtgewicht der Monoepoxyverbindung, während der Reaktion von Monoepoxyverbindung mit Initiator zugeführt wird.

3. Verfahren nach Anspruch 2, worin die Wassermenge etwa 1 Gewichtsteil pro jeweils 100 bis 20.000 Gewichtsteile Monoepoxyverbindung, bevorzugt etwa 1 Gewichtsteil pro jeweils 1000 bis 7000 Gewichtsteile Monoepoxyverbindung und stärker bevorzugt etwa 1 Gewichtsteil pro jeweils 3000 bis 5000 Gewichtsteile Monoepoxyverbindung beträgt.

4. Verfahren nach einem der vorhergehenden Ansprüche, worin der Katalysator Bariumhydroxid, wasserhaltiges Bariumhydroxid, Monohydroxybariumsalze, Strontiumhydroxid oder Gemische davon ist.

5. Verfahren nach einem der vorhergehenden Ansprüche, worin der Initiator 2 bis 8 aktiven Wasserstoff enthaltende Gruppen pro Molekül umfaßt und ein Äquivalentgewicht von 5 bis 1500 hat.

6. Verfahren nach einem der vorhergehenden Ansprüche, worin die Monoepoxyverbindung weiterhin Ethylenoxid, Styroloxid, Glycidol, Epichlorhydrin und Gemische davon umfaßt.

7. Verfahren nach einem der vorhergehenden Ansprüche, worin der Katalysator in einer Menge von 0,01 bis 50 Gewichtsprozent, bezogen auf das Gewicht des umzusetzenden Initiators vorhanden ist, und wobei die Reaktion bei einer Temperatur von 60°C bis 180°C und einem Druck bis zu 150 Pfund pro Quadratzoll Überdruck (psig) (1034,22 kPa) durchgeführt wird.

8. Verfahren nach einem der vorhergehenden Ansprüche, worin das Polyol einen Gesamtunsättigungsgehalt von weniger als 0,04 Milliäquivalent/Gramm Polyol aufweist.

9. Verfahren nach einem der vorhergehenden Ansprüche, worin ein Initiator mit 2 bis 4 aktiven Wasserstoff enthaltenden Gruppen pro Molekül in der Gegenwart von 0,1 bis 50,0 Gewichtsprozent Bariumhydroxid, wasserhaltigem Bariumhydroxid oder einem Monohydroxybariumsalz, bezogen auf das Gewicht des vorhandenen Initiators, mit einer Monoepoxyverbindung, umfassend mindestens 70 Gewichtsprozent Propylenoxid oder Butylenoxid bei einer Temperatur von 750C bis 130°C und einem Druck bis zu 150 Pfund pro Quadratzoll Überdruck (psig) (1034,22 kPa) umgesetzt wird.

10. Verwendung von Barium, Strontium und deren Oxiden, Hydroxiden, wasserhaltigen Hydroxiden oder Monohydroxysalzen oder Gemischen davon als Katalysator bei der Reaktion eines Initiators, der mindestens zwei aktiven Wasserstoff enthaltende Gruppen pro Molekül enthält mit einer Monoepoxyverbindung, umfassend mindestens 70 Gewichtsprozent Propylenoxid oder Butylenoxid, um ein Polyol mit einem Äquivalentgewicht von 200 bis 4000 zu erhalten,
   dadurch gekennzeichnet,

daß das entstehende Polyol einen Gesamtunsättigungsgehalt von weniger als 0,08 Milliäquivalent/Gramm Polyol aufweist.

**Revendications**

1. Procédé de préparation d'un polyol ayant un poids d'équivalent de 200 à 4000 consistant à faire réagir un composé monoépoxyde et un amorceur comportant au moins deux groupes qui contiennent des atomes d'hydrogène actifs par molécule en présence d'un catalyseur, caractérisé en ce que :

   (a) le catalyseur est choisi parmi le baryum, le strontium, et leurs oxydes, hydroxydes, hydroxydes hydratés, ou sels de monohydroxydes, ou mélanges de ces derniers ; et
   (b) le composé monoépoxyde comprend au moins 70% en poids d'oxyde de propylène, ou d'oxyde de butylène,

   dans lequel le polyol résultant a un taux total d'insaturations inférieur à 0,08 milliéquivalent/g de polyol.

2. Procédé conforme à la revendication 1, dans lequel on ajoute une quantité d'eau ne dépassant pas 1% en poids par rapport au poids total du composé monoépoxyde au cours de la réaction du composé monoépoxyde et de l'amorceur.

3. Procédé conforme à la revendication 2, dans lequel la quantité d'eau vaut environ 1 partie en poids pour chaque 100 à 20000 parties en poids de composé monoépoxyde, de préférence environ 1 partie en poids pour chaque 1000 à 7000 parties en poids de composé monoépoxyde, et mieux encore environ 1 partie en poids pour chaque 3000 à 5000 parties en poids de composé monoépoxyde.

4. Procédé conforme à l'une quelconque des précédentes revendications, dans lequel le catalyseur est l'hydroxyde de baryum, l'hydroxyde de baryum hydraté, des sels de monohydroxyde de baryum, l'hydroxyde de strontium, ou des mélanges de ces derniers.

5. Procédé conforme à l'une quelconque des précédentes revendications, dans lequel l'amorceur comporte de 2 à 8 groupes qui contiennent des atomes d'hydrogène actifs par molécule, et il a un poids d'équivalent de 5 à 1500.

6. Procédé conforme à l'une quelconque des précédentes revendications, dans lequel le composé monoépoxyde comprend aussi l'oxyde d'éthylène, l'oxyde de styrène, le glycidol, l'épichlorhydrine, et des mélanges de ces derniers.

7. Procédé conforme à l'une quelconque des précédentes revendications, dans lequel le catalyseur est présent en une quantité de 0,01 à 50% en poids par rapport au poids de l'amorceur qui réagit, et dans lequel on effectue la réaction à une température de 60°C à 180°C et sous une pression ne dépassant pas 1034,22 kPa.

8. Procédé conforme à l'une quelconque des précédentes revendications, dans lequel le polyol a un taux total d'insaturations inférieure à 0,04 milliéquivalent/g de polyol.

9. Procédé conforme à l'une quelconque des précédentes revendications, dans lequel on fait réagir un amorceur comportant 2 à 4 groupes qui contiennent des atomes d'hydrogène actifs par molécule en présence de 0,1 à 50,0% en poids par rapport au poids d'amorceur présent d'hydroxyde de baryum, d'hydroxyde de baryum hydraté, ou d'un sel de monohydroxyde de baryum avec un composé monoépoxyde comprenant au moins 70% en poids d'oxyde de propylène ou d'oxyde de butylène à une température de 75°C à 130°C et sous une pression ne dépassant pas 1034,22 kPa.

10. Utilisation du baryum, du strontium, et de leurs oxydes, hydroxydes, hydroxydes hydratés, ou sels de monohydroxydes, ou des mélanges de ces derniers, en tant que catalyseur lors de la réaction d'un amorceur comportant au moins 2 groupes qui contiennent des atomes d'hydrogène actifs par molécule, et d'un composé monoépoxyde comprenant au moins 70% en poids d'oxyde de propylène ou d'oxyde de butylène, afin d'obtenir un polyol ayant un poids d'équivalent de 200 à 4000, laquelle utilisation est caractérisée en ce que le polyol résultant a un taux d'insaturations inférieur à 0,08 milliéquivalent/g de polyol.